# EUROPÄISCHE PATENTSCHRIFT

(11) **EP 2 931 774 B1**
(45) Veröffentlichungstag und Bekanntmachung des Hinweises auf die Patenterteilung: **30.11.2016**
(21) Anmeldenummer: 13799570.0
(22) Anmeldetag: 05.12.2013
(51) Int. Cl.: C08G 18/48, C08G 18/66, C08G 18/79, C09D 175/08, C08G 18/32, C08G 18/44

(54) **HYDROLYSESTABILES POLYURETHAN ZUR ANWENDUNG IM OFF-SHORE BEREICH**
HYDROLYSIS-STABLE POLYURETHANE FOR USE IN OFFSHORE APPLICATIONS
POLYURÉTHANE STABLE PENDANT L'HYDROLYSE POUR APPLICATION DANS UNE ZONE OFFSHORE

(30) Priorität: 13.12.2012 EP 12197033
(43) Veröffentlichungstag der Anmeldung: 21.10.2015
(73) Patentinhaber: BASF SE, 67056 Ludwigshafen am Rhein (DE)
(72) Erfinder: KAMM, Andre, 49163 Bohmte (DE); LIESE, Julia, 28201 Bremen (DE); MCCLOUD, Paul, Alfreton Derbyshire DE55 4NL (GB)
(74) Vertreter: BASF IP Association
(86) Internationale Anmeldenummer: PCT/EP2013/075622
(87) Internationale Veröffentlichungsnummer: WO 2014/090673

(56) Entgegenhaltungen:
- EP-A1- 1 690 880
- US-A- 5 059 670
- US-A1- 2011 094 614

## Beschreibung

Die vorliegende Erfindung betrifft ein Verfahren zur Herstellung von Polyurethan beschichteten Leitungselementen bei dem man (a) aliphatisches Polyisocyanat mit (b) Verbindungen mit mindestens zwei gegenüber Isocyanat reaktiven Wasserstoffatomen, (c) Katalysator und (d) gegebenenfalls sonstigen Hilfsmitteln und/oder Zusatzstoffen, zu einer ersten Reaktionsmischung vermischt, die Reaktionsmischung direkt oder indirekt auf ein Rohr aufträgt und zu einer Polyurethanschicht ausreagieren lässt, wobei die Verbindungen mit mindestens zwei gegenüber Isocyanat reaktiven Wasserstoffatomen eine Verbindung auf Basis eines Akoylierungsprodukts eines aromatischen Startermoleküls enthält. Weiter betrifft die vorliegende Erfindung Leitungselemente, erhältlich nach einem solchen Verfahren.

Bei der Förderung von Erdöl aus dem Meer werden vermehrt Erdölvorkommen aus großen Tiefen gefördert. Das Erdöl solcher Förderstätten besitzt eine Temperatur von größer 100°C (bis 150°C). Dieses Öl wird mittels Pipelines von der Offshore Förderstätte auf das Festland gepumpt. Um den Wärmeverlust des Öls zu reduzieren, und dadurch das Ausfallen von Wachen aus dem Öl bei einem Förderstop zu vermeiden, ist die Pipeline mit einer Beschichtung aus, zum Beispiel Polyurethan, versehen.

So beschreibt WO 2005/056629 ein Verfahren zur Herstellung eines mit Glashohlkugeln gefülltem Polyurethan, um dem Wärmeverlust einer Ölpipeline zu reduzieren. Dabei werden in WO 2005/056629 bevorzugt aromatische Isocyanate verwendet.

Durch die immer tieferen Bohrungen und die dadurch resultierende höhere Temperatur des Öls werden die Pipelinecoatings einer immer höheren Wärmebelastung ausgesetzt. Diese Wärmebelastung unter Wasser erfordert eine verbesserte Hydrolysestabilität des Coatings.

WO 2007/042411, WO 99/03922 und WO 2010/003788 offenbaren Beschichtungen auf Basis von Polyisocyanuraten. Diese haben den Vorteil einer besseren Temperaturstabilität. Die Hydroylsestabilität bei hohen Temperaturen ist allerdings gegenüber normalen Polyurethanen nur bedingt besser. Ferner haben die Systeme den Nachteil, besonders schnell zu reagieren, sodass eine Füllung von großen Volumen nur schwer zu realisieren ist. Ebenso sind Polyisocyanurate aufgrund der großen Vernetzung durch den Isocyanuratring relativ spröde.

Aus P.A. Ykaman, Recent developments in aliphatic thermoplastic PU, Thermoplastische Elastomere III, Rapra Technology Limited, 1991 ist bekannt, dass Polyether-Polyurethan auf Basis aliphatischer Isocyanate gegenüber Polyurethan auf Basis aromatischer Isocyanate eine verbesserte Hydrolysestabilität aufweist. Ein Nachteil der aliphatischen Isocyanate ist allerdings deren hohe Flüchtigkeit. Durch die Toxizität beim Einatmen erfordert eine Verarbeitung aliphatischer Isocyanate aufwendige Vorsichtsmaßnahmen. Darüber hinaus sind aliphatische Isocyanate meist recht reaktionsträge.

Eine andere Möglichkeit das Problem der Giftigkeit von aliphatischen Isocyanaten wie HDI zu umgehen, ist der Einsatz von modifizierten aliphatischen Isocyanaten (Funktionalität >2), wie Isocyanurate. Solche modifizierte, aliphatische Isocyanate mit einer Funktionalität größer 2 werden beispielsweise unter dem Handelsnamen Basonat® vertrieben. Diese polyfunktionenellen aliphatischen Isocyanate zeigen aufgrund des hohen Isocyanatanteils eine gute Reaktivität, allerdings sind die mechanischen Eigenschaften dieser Polyurethane unzureichend.

Aufgabe der vorliegenden Erfindung war es, eine Pipeline mit einem Pipelinecoating zu entwickeln, welches eine verbesserte Hydrolysestabilität bei hohen Temperaturen aufweist und dennoch den hohen mechanischen Anforderungen in der Öl & Gasindustrie genügt.

Diese Aufgabe wird gelöst durch ein mit Polyurethan beschichtetes Leitungselement, herstellbar durch ein Verfahren, bei dem man (a) aliphatisches Polyisocyanat mit (b) Verbindungen mit mindestens zwei gegenüber Isocyanat reaktiven Wasserstoffatomen, (c) Katalysator und (d) gegebenenfalls sonstigen Hilfsmitteln und/oder Zusatzstoffen, zu einer ersten Reaktionsmischung vermischt, die Reaktionsmischung auf ein Leitungselement aufträgt und zu einer Polyurethanschicht ausreagieren lässt, wobei die Verbindungen mit mindestens zwei gegenüber Isocyanat reaktiven Wasserstoffatomen eine Verbindung auf Basis eines Akoxylierungsprodukts eines aromatischen Startermoleküls enthält.

Weiter wird die erfindungsgemäße Aufgabe gelöst durch ein mit Polyurethan beschichtetes Leitungselement, herstellbar durch ein Verfahren, bei dem man (a) aliphatisches Polyisocyanat mit (b) Verbindungen mit mindestens zwei gegenüber Isocyanat reaktiven Wasserstoffatomen, (c) Katalysator und (d) gegebenenfalls sonstigen Hilfsmitteln und/oder Zusatzstoffen, zu einer ersten Reaktionsmischung vermischt, die Reaktionsmischung in eine Form gibt und zu einem Formteil aushärtet, das Formteil entformt und auf ein Leitungselement aufbringt, wobei die Verbindungen mit mindestens zwei gegenüber Isocyanat reaktiven Wasserstoffatomen eine Verbindung auf Basis eines Akoxylierungsprodukts eines aromatischen Startermoleküls enthält.

Als mit Polyurethan beschichtete Leitungselemente im Sinn der vorliegenden Erfindung sollen nicht nur klassische beschichtete Rohrbeschichtungen sondern auch mit Polyurethan beschichtete Schweißbereiche von Rohrleitungen, sogenannte "Field Joints", und mit Polyurethan beschichtete Gegenständen, die mit Rohrleitungen in Verbindung stehen, wie Muffen, Borlochanschlüsse, Eruptionskreuze, Rohrsammler, Pumpen und Bojen verstanden werden. Auch sollen Leitungselemente mit Polyurethan beschichtete Kabel, vorzugsweise Off-Shore-Kabel umfassen. Weiter schließt im Sinn der vorliegenden Erfindung ein mit Polyurethan beschichtetes Leitungselement auch Rohre mit ein, die Ummantelungen zur Verstärkung, wie Bend Stiffener oder Bend Restriktoren aufweisen, wobei die Bend Stiffener und die Bend Restriktoren der Polyurethanbeschichtung entsprechen. Vorzugsweise ist unter dem erfindungsgemäßen mit Polyurethan beschichteten Leitungselement ein Leitungselement einer Off-Shore Pipeline oder ein Off Shore Kabel zu verstehen. Dabei bedeutet "Off Shore", dass diese Gegenstände bei üblicher Verwendung mit Meerwasser in Berührung kommen. Besonders bevorzugt ist das erfindungsgemäße, mit Polyurethan beschichtete Leitungselement ein mit Polyurethan beschichtetes Rohr einer Off-Shore Pipeline, ein Field Joint einer Off Shore Pipeline oder ein Eruptionskreuz (auch als X-Mas Tree bezeichnet) einer Off Shore Pipeline, insbesondere einer Off Shore Pipeline zur Förderung von Rohöl.

Die Beschichtung der Teile kann direkt oder Indirekt erfolgen, wobei bei einer indirekten Beschichtung das Polyurethan separat hergestellt wird und dann durch z.B. Verschraubungen auf das zu beschichtende Element aufgebracht wird. Bevorzugt wird Polyurethan direkt auf die Oberfläche des zu beschichtenden Materials gegossen oder gesprüht. Im Allgemeinen bestehen die zu beschichtenden Oberflächen aus Metallen, wie Stahl, Eisen, Kupfer oder Aluminium oder aus Kunststoffen, wie z.B. Polypropylen oder Epoxidharzen. Zur besseren Haftung können noch gegebenenfalls übliche Haftvermittler, wie interne Haftvermittler, die den Polyurethankomponenten zugegeben werden, externe Haftvermittler, die direkt auf die zu beschichtende Fläche gegeben werden und/oder physikalische Haftvermitter verwendet werden. Auch kann die zu beschichtende Oberfläche, beispielsweise durch beflammen oder Plasmabehandlung, vorbehandelt werden.

Aliphatische Isocyanate (a) im Sinne der gegenwärtigen Erfindung umfassen die aus dem Stand der Technik bekannten aliphatischen und cycloaliphatischen zwei- oder mehrwertigen Isocyanate (Bestandteil a-1) sowie beliebige Mischungen daraus. Beispiele sind Tetramethyl-endüsocyanat, Hexamethylendiisocyanat (HDI), Isophorondiisocyanat (IPDI), 4,4'-Diisocyanatodicyclohexylmethn (H12MDI)oder Mischungen der genannten Isocyanate. Neben den aliphatischen Isocyanaten können auch aromatische Isocyanate, wie 2,4- oder 2,6-Toluylendiisocyanat (TDI), 4,4'-Diphenylmethandiisocyanat, 2,4'-Diphenylmethandiisocyanat, die Mischungen aus monomeren Diphenylmethandiisocyanaten und höherkernigen Homologen des Diphenylmethandiisocyanats (Polymer-MDI) eingesetzt werden. Besonders werden im erfindungsgemäßen Verfahren weniger als 50 Gew.-%, besonders bevorzugt weniger als 20 Gew.-%, weiter bevorzugt weniger als 10 Gew.-% und insbesondere keine aromatischen Isocyanate, jeweils bezogen auf das Gesamtgewicht aller eingesetzten Isocyanate, eingesetzt.

Die genannten Isocyanate können direkt oder in Form von Umsetzungsprodukten mit sich selbst, wie Isocyanuraten, Allophanaten, Biureten, Isocyanuraten, Uretdionen oder Carbodiimiden sowie in Form von isocyaantterminierten Prepolymeren eingesetzt werden. Vorzugsweise enthält das aliphatische Isocyanat weniger als 15 Gew.-%, besonders bevorzugt weniger als 7.5 Gew.-% und insbesondere weniger als 1 Gew.-%, bezogen auf das Gesamtgewicht des aliphatischen Isocyanats, an monomerem aliphatischem Isocyanat. Die verbleibende Menge aliphatisches Isocyanat liegt dabei als modifiziertes aliphatisches Isocyanat vor. Besonders bevorzugt enthalten die aliphatischen Isocyanate (a) Isocyanurate, insbesondere Isocyanurat des Hexamethylendiisocyanats.

Als Verbindungen mit mindestens zwei gegenüber Isocyanat reaktiven Wasserstoffatomen (b) können alle in der Polyurethanchemie bekannten Verbindungen mit gegenüber Isocyanaten reaktiven Wasserstoffatomen eingesetzt werden. Diese umfassen polymere Verbindungen mit mindestens zwei gegenüber Isocyanat reaktiven Wasserstoffatomen sowie Kettenverlängerer und Vernetzungsmittel. Polymere Verbindungen mit mindestens zwei gegenüber Isocyanaten reaktiven Wasserstoffatomen weisen ein Molekulargewicht von mindestens 450 g/mol auf. Diese weisen beispielsweise eine Funktionalität von 2 bis 8 und einem Molekulargewicht von 450 bis 12000 auf. So können beispielsweise Polyetherpolyamine und/oder Polyole, ausgewählt aus der Gruppe der Polyetherpolyole, Polyesterpolyole oder Mischungen daraus, verwendet werden.

Als Kettenverlängerungsmittel und/oder Vernetzungsmittel können Substanzen mit einem Molekulargewicht von kleiner 450 g/mol, besonders bevorzugt von 60 bis 400 g/mol eingesetzt werden, wobei Kettenverlängerer 2 gegenüber Isocyanaten reaktive Wasserstoffatome und Vernetzungsmittel 3 oder mehr gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 450, besonders bevorzugt von 60 bis 400 und insbesondere 60 bis 350 eingesetzt. In Betracht kommen beispielsweise aliphatische, cycloaliphatische und/oder araliphatische oder aromatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Verbindungen mit mindestens zwei gegenüber Isocyanat reaktiven Wasserstoffatomen (b) enthalten mindestens eine Verbindung auf Basis eines Akoxylierungsprodukts eines aromatischen Startermoleküls (b1). Je nach Kettenlänge kann diese unter die Definition der polymeren Verbindungen mit mindestens zwei gegenüber Isocyanaten reaktiven Wasserstoffatomen oder der Kettenverlängerer und gegebenenfalls der Vernetzungsmittel fallen. Als aromatisches Startermolekül geeignet sind dabei beispielsweise Phenylendiamin, 2,3-, 2,4- und 2,6-Toluylendiamin (TDA), 4,4'-, 2,4'- und 2,2'-Diaminodiphenylmethan (MDA), polymerisches MDA, und Bisphenole.

Vorzugsweise weist das aromatische Startermolekül mindestens zwei Benzolringe auf und ist besonders bevorzugt ein Bisphenol oder ein Derivat eines Bisphenols. Dabei sind im Sinn der Erfindung unter Derivaten Verbindungen zu verstehen, bei denen Wasserstoffatome an aromatischen oder an aliphatischen C-Atomen durch Holohenatome oder Kohlenwasserstoffreste, wie Alkyl- oder Arylreste ersetzt werden. Diese Kohlenwasserstoffreste können unsubstituiert oder substituiert, beispielsweise durch Halogenatome, Sauerstoff, Schwefel oder Phosphor sein. Diese können einzeln oder in Form von Mischungen eingesetzt werden.

Bisphenole umfassen Bisphenol A, Bisphenol AF, Bisphenol AP, Bisphenol BP, Bisphenol C, Bisphenol E, Bisphenol F, Bisphenol FL, Bisphenol G, Bisphenol M, Bisphenol P, Bisphenol PH, Bisphenol S, Bisphenol TMC und Bisphenol Z. Besonders bevorzugt werden Bisphenol A und/oder Bisphenol S und insbesondere Bisphenol A als aromatisches Startermolekül eingesetzt.

Die Verbindungen auf Basis eines Akoylierungsprodukts eines aromatischen Startermoleküls werden durch Alkoxylierung des Startermoleküls mit Alkylenoxyden erhalten. Beispielsweise können sie durch anionische Polymerisation der Startermoleküle mit Alkylenoxiden unter Einsatz von Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren erhalten werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Vorzugsweise werden Ethylenoxid oder Propylenoxid, insbesondere Ethylenoxyd als Alkylenoxid eingesetzt.

Die Alkoxylierungsprodukte eines aromatischen Startermoleküls können unverändert eingesetzt werden. Gegebenenfalls kann auch eine oder beide oder, falls vorhanden auch weitere, OH-Gruppen des Alkoxylierungsprodukts eines aromatischen Startermoleküls zur Erhöhung der Reaktivität zur Aminogruppe umgesetzt werden. Verbindungen auf Basis eines Akoylierungsprodukts eines aromatischen Startermoleküls umfassen daher die direkt erhältlichen Alkylierungsprodukte sowie die Umsetzungsprodukte dieser Alkylierungsprodukte zur Funktionalisierung der OH-Gruppen, beispielsweise die Umsetzungsprodukte zum Amin.

Erfindungsgemäße Verbindung auf Basis eines Akoylierungsprodukts eines aromatischen Startermoleküls weisen vorzugsweise eine Hydroxylzahl von 100 bis 400 mg KOH/g, besonders bevorzugt 150 bis 350 mg KOH/g und insbesondere 200 bis 300 mg KOH/g auf. Alkoxylierungsprodukte von Bisphenol A als Starter mit Ethylenoxyd werden unter dem Handelsnamen Pluriol® BP 30, 40, 60 oder 100 von BASF vertrieben.

Neben den Verbindungen auf Basis eines Akoylierungsprodukts eines aromatischen Startermoleküls enthalten die Verbindungen mit mindestens zwei gegenüber Isocyanat reaktiven Wasserstoffatomen (b) vorzugsweise weitere Polyole. Die bevorzugt zur Anwendung kommenden Polyole sind Polyetherole, Polycarbonatpolyole und/oder Polyesterole mit Molekulargewichten zwischen 450 und 12000, bevorzugt 500 bis 6000, insbesondere 500 bis weniger als 3000, und bevorzugt einer mittleren Funktionalität von 2 bis 6, bevorzugt 2 bis 4. Vorzugsweise werden als Polyole ausschließlich Polyetherole und Polycarbonatpolyole eingesetzt.

Die erfindungsgemäß verwendbaren Polyetherole, werden nach bekannten Verfahren hergestellt. Beispielsweise können sie durch anionische Polymerisation mit Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyetherpolyole durch Doppelmetallcyanidkatalyse aus einem oder mehreren Alkylenoxiden mit 2 bis 4 Kohlenstoffatomen im Alkylenrest hergestellt werden. Auch tertiäre Amine können als Katalysator eingesetzt werden, beispielsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymerisches MDA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon. Die Polyetherpolyole können einzeln oder in Form von Mischungen verwendet werden.

Vorzugsweise enthalten die Verbindungen mit mindestens zwei gegenüber Isocyanaten reaktiven Wasserstoffatomen (b) neben Verbindung auf Basis eines Akoylierungsprodukts eines aromatischen Startermoleküls (b1) Polyetherpolyole auf Basis eines difunktionellen Startermoleküls (b2) und Polyetherpolyole auf Basis eines trifunktionellen Startermoleküls (b3).

Als difunktionelle Startermoleküle zu Herstellung des Bestandteils (b2) kann beispielsweise Ethandiol, Propandiol-1,2 und -1,3, Diethylenglykol, Dipropylenglykol, Butandiol-1,4 oder Hexandiol-1,6 oder Gemische davon verwendet werden. Bevorzugt wird Diethylenglykol oder Dipropylenglykol verwendet.

Im Allgemeinen wird die Alkoxylierung des Bestandteils (b2) derart ausgeführt, dass der Bestandteil (b2) ein zahlenmittleres Molekulargewicht von 500 g/mol bis 3500 g/mol, bevorzugt von 600 bis 2500 g/mol, besonders bevorzugt von 800 bis 1500 g/mol aufweist.

Als trifunktionelle Startermoleküle zu Herstellung des Bestandteils (b3) werden bevorzugt Glycerin, Trimethylolpropan oder Gemische davon verwendet.

Im Allgemeinen wird die Alkoxylierung des Bestandteils (b3) derart ausgeführt, dass der Bestandteil (b2) ein zahlenmittleres Molekulargewicht von 500 g/mol bis 8000 g/mol, bevorzugt von 1000 bis 6000 g/mol aufweist.

In einer bevorzugten Ausführungsform umfasst der Polyolbestandteil (b3) die Bestandteile (b3-1) und (b3-2), wobei es sich jeweils um ein Polyetherpolyol auf Basis eines trifunktionellen Startermoleküls handelt, jedoch mit unterschiedlichem Molekulargewicht.

Der Bestandteil (b3-1) umfasst ein Polyetherpolyol auf Basis eines trifunktionellen Startermoleküls mit einem zahlenmittleren Molekulargewicht von 500 g/mol bis 3500 g/mol, bevorzugt von 1000 bis 3200 g/mol, besonders bevorzugt von 1500 bis 3000 g/mol, insbesondere von 1800 bis 2900 g/mol.

Der Bestandteil (b3-2) ist üblicherweise ein Polyetherpolyol auf Basis eines trifunktionellen Startermoleküls mit einem zahlenmittleren Molekulargewicht von mehr als 3500 g/mol bis 8000 g/mol sein, bevorzugt von 3700 bis 7000 g/mol, besonders bevorzugt von 4000 g/mol bis 6000 g/mol.

In einer weiteren Ausführungsform enthalten die polymeren Verbindungen mit mindestens zwei gegenüber Isocyanat reaktiven Wasserstoffatomen als zusätzlichen Bestandteil b4) ein Polyetherpolyol auf Basis eines vier- oder höherfunktionellen Startermoleküls. Bevorzugt verwendet werden 4- bis 6-funktionelle Startermoleküle. Beispiele für geeignete Startermoleküle sind Pentaerythrit, Sorbitol und Saccharose.

Die erfindungsgemäß verwendbaren Polycarbonatpolyole, werden nach bekannten Verfahren, beispielsweise wie in JP1998000267980 und US62655524 beschrieben, hergestellt. Sie werden z.B. durch Ester-Austauschreaktion mit einem aliphatischen Diol und Dimethylcarbonat erhalten. Vorzugsweise weisen Polycarbonatpolyole im Sinn der Erfindung zahlenmittlere Molekulargewichte von 500 bis 2000 g/mol, besonders bevorzugt 500 bis 1000 g/mol und Funktionalitäten von vorzugsweise 2 bis 6 und besonders bevorzugt 2 bis 3 auf. Als Polycarbonatpolyole können beispielsweise kommerziell erhältliche Polycarbonatpolyole, wie Eternacoll® UH 100, UH 50 oder PH 200 der Firma UBE Chemicals eingesetzt werden.

Vorzugsweise werden die Komponenten b1), b2), b3) und gegebenenfalls b4) in einer Menge eingesetzt, dass die Viskosität der Verbindungen mit mindestens zwei gegenüber Isocyanat reaktiven Wasserstoffatomen bei 25 °C, gemessen nach DIN 53019, weniger als 1000 mPas, bevorzugt weniger als 500 mPas bei 25°C und besonders bevorzugt von 200 bis 400 mPas aufweist.

Vorzugsweise enthalten die Verbindungen mit mindestens zwei gegenüber Isocyanat reaktiven Wasserstoffatomen (b) dabei neben den Verbindungen auf Basis eines Akoylierungsprodukts eines aromatischen Startermoleküls keine weiteren Kettenverlängerer.

Als Katalysatoren (c) zur Herstellung der Polyurethanformkörper werden bevorzugt Verbindungen verwendet, welche die Reaktion der Hydroxylgruppen enthaltenden Verbindungen der Komponente (b) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Gegebenenfalls können der der Mischung der Komponenten a) bis c) Hilfs- und Zusatzstoffe (d) zugesetzt werden. Hier seien beispielsweise oberflächenaktive Substanzen, Farbstoffe, Pigmente, Hydrolyseschutzstabilisatoren, Oxidationsschutzmittel, UV-Schutzmittel, Latentwärmespeicher und Mikroholkugeln genannt.

Unter dem Begriff Mikrohohlkugeln sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralischen Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen oder mineralischen Hohlkugeln einen Durchmesser von 1 bis 1000 µm, bevorzugt von 5 bis 200 µm auf. Üblicherweise weisen die organischen oder mineralischen Hohlkugeln eine Schüttdichte von 0,1 bis 0,4 g/cm³ auf. Sie besitzen im Allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite^{®} Glass Bubbles verwendet werden.

Als Latentwärmespeicher können verkapselte und nicht verkapselte, lipophile Substanzen mit einem fest/flüssig-Übergang oberhalb von 20 °C, meist Wachse, eingesetzt werden. Diese können in einem Polymer verkapselt vorliegen. Bei laufender Rohölförderung nehmen die Latentwärmespeicher Wärme des warmen Rohöls auf und schmelzen. Bei einem kurzzeitigen Produktionsstopp kühlt die Isolierschicht von außen her langsam ab, wobei sich auch die lipophile Füllung der Latentwärmespeicher abkühlt, verfestigt und dabei die aufgenommenen Wärme wieder an das Rohöl abgibt. Ähnliche Lösungen sind in DE 10256550, WO 2004003424, US 6,000,438, WO 2002016733 oder CN 101545565 beschrieben.

Des Weiteren können als Hilfs- und Zusatzstoffe (d) thixotropierende Additive, wie beispielsweise Laromin^{®} C 260 (Di-methyl-methylen-Bis-Cyclohexylamin) enthalten sein. Im Allgemeinen liegt die eingesetzte Menge dieser thixotropierenden Additive zwischen 0,1 und 3 Gewichtsteilen, bezogen auf 100 Gewichtsteile der Komponente (b).

Ferner ist es möglich, als Hilfs- und Zusatzstoffe (d) aus dem Stand der Technik bekannte Treibmittel zuzusetzen. Es ist jedoch bevorzugt, dass kein Treibmittel eingesetzt wird, insbesondere, dass kein Wasser zugesetzt wird. Somit enthalten die Komponenten a) und b) besonders bevorzugt kein Treibmittel, abgesehen von Restwasser, welches in technisch hergestellten Polyolen enthalten ist.

Ferner ist es besonders bevorzugt, wenn der Restwassergehalt durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente b), eingesetzt.

Sofern wie oben beschrieben keine Treibmittel eingesetzt werden, erhält man als erfindungsgemäßes Produkt kompakte Polyurethane und keine Polyurethanschaumstoffe.

Zur Herstellung der erfindungsgemäßen Polyurethanreaktionsmischung werden die organischen Polyisocyanate a) und die Komponenten, die Verbindungen gegenüber Isocyanaten reaktive Wasserstoffatome enthalten, in solchen Mengen zur Umsetzung gebracht, dass das Äquivalenzverhältnis von NCO-Gruppen der Isocyanatgruppen zur Summe der reaktiven Wasserstoffatome 0,5 : 1 bis 3,50 : 1 (entsprechend einem Isocyanatindex von 50 bis 350), vorzugsweise 0,85 : 1 bis 1,30 : 1 und besonders bevorzugt von 0,9 : 1 bis 1,15 : 1 beträgt.

Die Ausgangskomponenten werden üblicherweise bei einer Temperatur von 0 °C bis 100 °C, bevorzugt 15 °C bis 60 °C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen. Dabei können die zu beschichtenden Teile entweder über das Formgießen hergestellt werden oder mittels eines Rotationsverfahrens. Bevorzugt wird jedoch das Formgießen verwendet. Dabei wird die Reaktionsmischung der Komponenten (a), (b), (c), (d), (e) und ggf. (f) in eine Form gegossen, welche das zu Beschichtende Element, zum Beispiel das Rohr enthält. Nach dem Aushärten des Polyurethans wird die Form entfernt. Das Material kann direkt verwendet werden. In einer besonderen Ausführungsform der Erfindung wird das beschichtete Teil noch einer Wärmebehandlung unterzogen.

Beim Rotationsgießverfahren erfolgt das Aufbringen der Reaktionsmischung durch Aufgießen auf das sich drehende Element, zum Beispiel das Pipelinerohr. Dabei wird die Reaktionsmischung mittels herkömmlicher Mischvorrichtungen, z.B. Niederdruckmischkopf, erhalten. In einer besonderen Ausführungsform erfolgt Austrag über eine Breitschlitzdüse. Der Vorschub des Mischkopfs oder des Rohres wird im Allgemeinen so eingestellt, dass bei konstantem Ausstoß die gewünschte Dicke der Polyurethanschicht erreicht wird. Hierzu kann die Reaktionsmischung bevorzugt thixotropierende Additive enthalten, wodurch ein Herabtropfen des Reaktionsgemisches vom rotierenden Element verhindert wird.

Alternativ kann die Beschichtung indirekt erfolgen. Dazu wird die Reaktionsmischung der Komponenten a), (b), (c), (d), (e) und ggf. (f) in eine Form gegossen und anschließend entformt. Das so hergestellte Formteil wir dann auf das zu beschichtende Rohrelement aufgebracht, beispielsweise durch verschrauben oder verkleben.

Die Dicke der Polyurethanschicht beträgt vorzugsweise 5 bis 200 mm, besonders bevorzugt 10 bis 150 mm und insbesondere 20 bis 100 mm. Gegebenenfalls kann auf die Polyurethanschicht eine oder mehrere weitere Schichten, z.B. eine isolierende Schicht und/oder eine Deckschicht aus einem Thermoplasten aufgebracht werden. Vorzugsweise werden auf die Polyurethanschicht keine weiteren Schichten aufgebracht.

Die erfindungsgemäße Polyurethanbeschichtung zeichnet sich durch hervorragende mechanische Eigenschaften, wie Bruchdehnung und Zugfestigkeit sowie eine hervorragende Hydrolysestabilität aus. Weiter kann aliphatisches Isocyanat eingespart werden, wodurch ein preiswerteres Produkt mit verbesserten mechanischen Eigenschaften erhalten wird.

Ein solches Leitungselement, beispielsweise ein Rohr, kann ein unbeschichtetes Leitungselement aus Stahl sein, es können aber auch Leitungselemente eingesetzt werden, die bereits eine oder mehrere Lagen Beschichtung aufweisen. Vorzugsweise wird im Rahmen der vorliegenden Erfindung das Leitungselement direkt mit der erfindungsgemäßen Polyurethanreaktionsmischung beschichtet. Alternativ kann die erfindungsgemäßen Polyurethanreaktionsmischung auch auf beispielsweise auch auf ein mit powder sprayed fusion-bonded epoxy oder mit Polypropylen beschichtetes Leitungselement aufgebracht werden. Gegebenenfalls kann das Leitungselement auch bereits mit einer ersten Polyurethanschicht beschichtet sein, die beispielsweise Latentwärmespreicher enthält. Anschließend wird die Polyurethanreaktionsmischung zu einer Polyurethanschicht ausgehärtet, gegebenenfalls unter Wärmebehandlung, beispielsweise durch Bestrahlung oder in einem Ofen.

Die Erfindung soll durch nachstehende Beispiele veranschaulicht werden.

### Ausgangsmaterialien

Polyol 1: Polycarbonatdiol UH 100 Firma UBE mit einer OH-Zahl von 107 mg KOH/g
Polyol 2: Polycarbonatdiol Oxymer M 112 der Firma Perstop mit einer OH-Zahl von 112 mg KOH/g
Defoam: Entschäumer
KV 1: 1,4-Butandiol
KV 2: Bisphenol A Ethoxylat der Firma BASF SE (Pluriol® BP 40 E) mit einer OH-Zahl von 278 mg KOH/g
Z 1: Zeolithpaste in Rizinusöl (50%ig)
Z 2: Zeolithpulver
Kat 1: Fomrez UL 28
ISO 1: aliphatisches Isocyanat Basonat HI 100 der Firma BASF mit einen NCO-Gehalt von 22%

Dabei steht MV für das Mischungsverhältnis von der Polyolkomponente aus Polyol, KV, Defoam, Z und Kat mit Isocyanat 1, angegeben in x Teilen Isocyanat auf 100 Teile Polyolkomponente. Zugfestigkeit (ZF) und Dehnung wurden gemäß DIN 53504 bestimmt.

| | B1 | B2 | EGB 1 | EGB 2 | B3 | B4 | EGB 3 | EGB 4 |
|---|---|---|---|---|---|---|---|---|
| Polyol 1 | 98,210 | 81,985 | 60,000 | 50,000 | | | | |
| Polyol 2 | | | | | 98,240 | 83,230 | 60,000 | 49,100 |
| KV 1 | | 15,000 | | | | 15,000 | | |
| KV 2 | | | 38,230 | 48,230 | | | 38,200 | 49,100 |
| Defoam | 0,500 | 0,500 | 0,500 | 0,500 | 0,500 | 0,500 | 0,500 | 0,500 |
| Z1 | | 2,500 | | | | | | |
| Z2 | 1,250 | | 1,250 | 1,250 | 1,250 | 1,250 | 1,250 | 1,250 |
| Kat 1 | 0,040 | 0,015 | 0,02 | 0,02 | 0,01 | 0,02 | 0,050 | 0,050 |
| ISO 1 | 100 | 100 | 100 | 100 | 100 | 100 | 100 | 100 |
| MV 100: | 36,3 | 94,4 | 58,5 | 64,3 | 37,8 | 95,7 | 59,4 | 65,6 |
| | | | | | | | | |
| Mol KV / g PU | 0 | 0,86*10⁻³ | 0,60*10⁻³ | 0,73*10⁻³ | 0 | 0,85*10⁻³ | 0,59*10⁻³ | 0,73*10⁻³ |
| | | | | | | | | |
| Härte [Shore A oder D] | 68 A | 82 A | 76 A | 85 A | 59 A | 59 D | 60 D | 69 D |
| ZF [MPa] | 4,2 | 15,1 | 12,6 | 25,8 | 5,8 | 11,3 | 15,9 | 31,7 |
| Dehnung [%] | 109 | 107 | 148 | 142 | 145 | 28 | 46 | 28 |

Wie aus den Beispielen ersichtlich ist, führen geringere molare Einsatzmengen des erfindungsgemäßen KV in Kombination mit polyfunktionellen aliphatischen Isocyanaten bei vergleichbaren Härten zu besseren mechanischen Eigenschaften (höhere ZF und bessere Dehnung).

## Patentansprüche

1. Verfahren zur Herstellung von Polyurethan beschichteten Leitungselementen bei dem man
a) aliphatisches Polyisocyanat mit
b) Verbindungen mit mindestens zwei gegenüber Isocyanat reaktiven Wasserstoffatomen,
c) Katalysator und
d) gegebenenfalls sonstigen Hilfsmitteln und/oder Zusatzstoffen,
zu einer ersten Reaktionsmischung vermischt, die Reaktionsmischung auf ein Leitungselement aufträgt und zu einer Polyurethanschicht ausreagieren lässt, wobei der Isocyanatindex 50 bis 350 beträgt und die Verbindungen mit mindestens zwei gegenüber Isocyanat reaktiven Wasserstoffatomen mindestens eine Verbindung auf Basis eines Akoxylierungsprodukts eines aromatischen Startermoleküls enthält.

2. Verfahren zur Herstellung Polyurethan beschichteten Leitungselementen bei dem man
a) aliphatisches Polyisocyanat mit
b) Verbindungen mit mindestens zwei gegenüber Isocyanat reaktiven Wasserstoffatomen,
c) Katalysator und
d) gegebenenfalls sonstigen Hilfsmitteln und/oder Zusatzstoffen,
zu einer ersten Reaktionsmischung vermischt, die Reaktionsmischung in eine Form gibt und zu einem Formteil aushärtet, das Formteil entformt und auf ein Leitungselement aufbringt, wobei der Isocyanatindex 50 bis 350 beträgt und die Verbindungen mit mindestens zwei gegenüber Isocyanat reaktiven Wasserstoffatomen mindestens eine Verbindung auf Basis eines Akoxylierungsprodukts eines aromatischen Startermoleküls enthält.

3. Verfahren nach Anspruch 1 oder 2, **dadurch gekennzeichnet, dass** das aromatische Startermolekül mindestens zwei Benzolringe enthält.

4. Verfahren nach einem der Ansprüche 1 bis 3, **dadurch gekennzeichnet, dass** der aromatische Starter ein Bisphenol oder ein Derivat eines Bisphenols ist.

5. Verfahren nach einem der Ansprüche 1 bis 4, **dadurch gekennzeichnet**, das der Aromatische Starter Bisphenol A oder Bisphenol S ist.

6. Verfahren nach einem der Ansprüche 1 bis 5, **dadurch gekennzeichnet, dass** Verbindung auf Basis eines Akoylierungsprodukts eines aromatischen Startermoleküls eine Hydroxylzahl von 100 bis 400 mg KOH/g aufweist.

7. Verfahren nach einem der Ansprüche 1 bis 6, **dadurch gekennzeichnet, dass** das aliphatische Isocyanat aliphatisches Isocyanurat, Allophanat oder Biuret enthält.

8. Verfahren nach Anspruch 7, **dadurch gekennzeichnet, dass** das aliphatische Isocyanurat Isocyanurat aus Hexamethylendiisocyanat ist.

9. Mit Polyurethan beschichtete Leitungselemente, erhältlich nach einem Verfahren gemäß einem der Ansprüche 1 bis 8.

10. Mit Polyurethan beschichtete Leitungselemente nach Anspruch 9, **dadurch gekennzeichnet, dass** das mit Polyurethan beschichtete Leitungselement ein Rohr einer Off-Shore Pipeline, ein Field Joint einer Off Shore Pipeline oder ein Eruptionskreuz einer Off Shore Pipeline ist.

## Claims

1. A process for producing polyurethane-coated conduit elements, in which
a) aliphatic polyisocyanate is mixed with
b) compounds having at least two hydrogen atoms which are reactive toward isocyanate,
c) catalyst and
d) optionally other auxiliaries and/or additives,
to form a first reaction mixture, the reaction mixture is applied to a conduit element and allowed to react to form a polyurethane layer, wherein the isocyanate index is from 50 to 350 and the compounds having at least two hydrogen atoms which are reactive toward isocyanate comprise a compound based on an alkoxylation product of an aromatic starter molecule.

2. A process for producing polyurethane-coated conduit elements, in which
a) aliphatic polyisocyanate is mixed with
b) compounds having at least two hydrogen atoms which are reactive toward isocyanate,
c) catalyst and
d) optionally other auxiliaries and/or additives,
to form a first reaction mixture, the reaction mixture is introduced into a mold and cured to form a molding, the molding is removed from the mold and applied to a conduit element, wherein the isocyanate index is from 50 to 350 and the compounds having at least two hydrogen atoms which are reactive toward isocyanate comprise at least one compound based on an alkoxylation product of an aromatic starter molecule.

3. The process according to claim 1 or 2, wherein the aromatic starter molecule comprises at least two benzene rings.

4. The process according to any of claims 1 to 3, wherein the aromatic starter is a bisphenol or a derivative of a bisphenol.

5. The process according to any of claims 1 to 4, wherein the aromatic starter is bisphenol A or bisphenol S.

6. The process according to any of claims 1 to 5, wherein the compound based on an alkoxylation product of an aromatic starter molecule has a hydroxyl number of from 100 to 400 mg KOH/g.

7. The process according to any of claims 1 to 6, wherein the aliphatic isocyanate comprises aliphatic isocyanurate, allophanate or biuret.

8. The process according to claim 7, wherein the aliphatic isocyanurate is the isocyanurate derived from hexamethylene diisocyanate.

9. A polyurethane-coated conduit element which can be obtained by a process according to any of claims 1 to 8.

10. The polyurethane-coated conduit element according to claim 9, wherein the polyurethane-coated conduit element is a pipe of an off-shore pipeline, a field joint of an off-shore pipeline or an eruption cross of an off-shore pipeline.

## Revendications

1. Procédé pour la préparation d'éléments de tuyauterie revêtus de polyuréthane, dans lequel on mélange
a) du polyisocyanate aliphatique avec
b) des composés présentant au moins deux atomes d'hydrogène réactif par rapport à isocyanate,
c) un catalyseur et
d) le cas échéant d'autres adjuvants et/ou additifs,
en un premier mélange réactionnel, on applique le mélange réactionnel sur un élément de tuyauterie et on le laisse réagir en une couche de polyuréthane, l'indice d'isocyanate valant 50 à 350 et les composés présentant au moins deux atomes d'hydrogène réactif par rapport à isocyanate contenant au moins un composé à base d'un produit d'alcoxylation d'une molécule initiatrice aromatique.

2. Procédé pour la préparation d'éléments de tuyauterie revêtus de polyuréthane, dans lequel on mélange
a) du polyisocyanate aliphatique avec
b) des composés présentant au moins deux atomes d'hydrogène réactif par rapport à isocyanate,
c) un catalyseur et
d) le cas échéant d'autres adjuvants et/ou additifs,
en un premier mélange réactionnel, on introduit le mélange réactionnel dans un moule et on le durcit en une pièce moulée, on démoule la pièce moulée et on l'applique sur un élément de tuyauterie, l'indice d'isocyanate valant 50 à 350 et les composés présentant au moins deux atomes d'hydrogène réactif par rapport à isocyanate contenant au moins un composé à base d'un produit d'alcoxylation d'une molécule initiatrice aromatique.

3. Procédé selon la revendication 1 ou 2, **caractérisé en ce que** la molécule initiatrice aromatique contient au moins deux cycles benzène.

4. Procédé selon l'une quelconque des revendications 1 à 3, **caractérisé en ce que** l'initiateur aromatique est un bisphénol ou un dérivé d'un bisphénol.

5. Procédé selon l'une quelconque des revendications 1 à 4, **caractérisé en ce que** l'initiateur aromatique est le bisphénol A ou le bisphénol S.

6. Procédé selon l'une quelconque des revendications 1 à 5, **caractérisé en ce que** le composé à base d'un produit d'alcoxylation d'une molécule initiatrice aromatique présente un indice d'hydroxyle de 100 à 400 mg de KOH/g.

7. Procédé selon l'une quelconque des revendications 1 à 6, **caractérisé en ce que** l'isocyanate aliphatique contient un isocyanurate aliphatique, un allophanate ou du biuret.

8. Procédé selon la revendication 7, **caractérisé en ce que** l'isocyanurate aliphatique est l'isocyanurate d'hexaméthylènediisocyanate.

9. Éléments de tuyauterie revêtus de polyuréthane, pouvant être obtenus selon un procédé selon l'une quelconque des revendications 1 à 8.

10. Éléments de tuyauterie revêtus de polyuréthane selon la revendication 9, **caractérisés en ce que** l'élément de tuyauterie revêtu de polyuréthane est un tube d'un pipeline off-shore, un joint de conduite d'un pipeline off-shore ou une tête d'éruption d'un pipeline off-shore.
